# EUROPÄISCHE PATENTSCHRIFT

(11) **EP 2 025 025 B1**
(45) Veröffentlichungstag und Bekanntmachung des Hinweises auf die Patenterteilung: **16.02.2011**
(21) Anmeldenummer: 07722227.1
(22) Anmeldetag: 18.04.2007
(51) Int. Cl.: H01M 8/02, H01M 8/12

(54) **INTERKONNEKTOR FÜR EINEN BRENNSTOFF ZELLENSTAPEL UND VERFAHREN ZUR HERSTELLUNG**
INTERCONNECTOR FOR A FUEL CELL STACK, AND METHOD FOR PRODUCTION
INTERCONNECTEUR POUR UN EMPILEMENT DE CELLULES À COMBUSTIBLE ET PROCÉDÉ DE FABRICATION

(30) Priorität: 23.05.2006 DE 102006024039
(43) Veröffentlichungstag der Anmeldung: 18.02.2009
(73) Patentinhaber: Forschungszentrum Jülich GmbH, 52425 Jülich (DE)
(72) Erfinder: NIEWOLAK, Leszek, 52428 Jülich (DE); QUADAKKERS, Willem, J., 6363 EG Wijnandsrade (NL); SINGHEISER, Lorenz, 52428 Jülich (DE)
(74) Vertreter: Hoppe, Karin
(86) Internationale Anmeldenummer: PCT/DE2007/000669
(87) Internationale Veröffentlichungsnummer: WO 2007/134560

(56) Entgegenhaltungen:
- WO-A-00/59057
- WO-A-2006/138070
- DE-A1- 10 306 647
- DE-A1- 10 306 649
- DE-A1- 19 913 873
- US-A1- 2003 224 234
- US-B1- 6 326 096
- MICHALIK M ET AL: "Effect of component thickness on lifetime and oxidation rate of chromia forming ferritic steels in low and high pO2 environments" MATERIALS AT HIGH TEMPERATURES, BUTTERWORTH HEINEMANN, GUILDFORD, GB, Bd. 22, Nr. 3-4, 2005, Seiten 213-221, XP008083919 ISSN: 0960-3409

## Beschreibung

Die Erfindung betrifft einen Interkonnektor für einen Brennstoffzellenstapel und ein Verfahren zur Herstellung.

### Stand der Technik

Eine Hochtemperaturbrennstoffzelle wandelt die chemische Energie eines Brennstoffs, wie etwa Wasserstoff oder Methan, direkt in chemische Energie um. Hierzu wird der Brennstoff mit einem Oxidationsmittel, wie etwa Luft oder reinem Sauerstoff, oxidiert. Dabei sind Brennstoff und Oxidationsmittel durch einen Sauerstoffionen leitenden Festelektrolyten, wie beispielsweise Yttriumstabilisiertes Zirkoniumoxid, getrennt.

Der Elektrolyt ist mit porösen, katalytisch wirkenden Elektrodenmaterialien beschichtet. Im Allgemeinen ist die Anode auf der Brennstoffseite ein Cermet aus metallischem Nickel und Zirkoniumoxid. Die Kathode auf der Oxidationsmittelseite ist in der Regel ein Perowskit auf Lanthan-Basis.

Da eine einzelne Brennstoffzelle nur eine sehr geringe Spannung liefert, müssen für technische Anwendungen viele Zellen zu einem Brennstoffzellenstapel zusammengeschaltet werden. Dazu wird zwischen zwei Brennstoffzellen jeweils ein gasdichter, jedoch elektrisch leitender Interkonnektor angeordnet. Dieser Interkonnektor muss einen an die übrigen Komponenten der Brennstoffzellen angepassten thermischen Ausdehnungskoeffizienten zwischen 10*10⁻⁶ und 12*10⁻⁶ K⁻¹ aufweisen. Außerdem darf er in den Betriebsatmosphären der Brennstoffzelle nicht oxidieren.

Prinzipiell werden diese Anforderungen von ferritischen Chromstählen erfüllt. Die Kontaktierung der Anode mit einem solchen Interkonnektor ist jedoch problematisch. Die schützende Oxidschicht, die diese Werkstoffe bilden, setzt die elektrische Leitfähigkeit des Interkonnektors stark herab. Zudem werden zur elektrischen Kontaktierung zwischen dem Interkonnektor und der Anode in der Regel nickelhaltige Mittel eingesetzt. Stehen diese Mittel mit dem Interkonnektor in direktem Kontakt, degradieren nachteilig sowohl diese Mittel als auch der Interkonnektor schon nach relativ kurzer Betriebszeit.

Aus WO 02/058169 A2 ist ein Interkonnektor für eine Hochtemperatur- Brennstoffzelle, bestehend aus einem ferritischen Stahl, beispielsweise FeCrAl, mit einer Beschichtung aus Kupfer bekannt.

### Aufgabe und Lösung

Aufgabe der Erfindung ist daher, einen Interkonnektor für einen Brennstoffzellenstapel zur Verfügung zu stellen, der eine verbesserte Dauerhaltbarkeit insbesondere beim Kontakt mit nickelhaltigen Materialien aufweist.

Diese Aufgabe wird erfindungsgemäß gelöst durch einen Interkonnektor gemäß Hauptanspruch, eine Verwendung gemäß Nebenanspruch und ein Verfahren gemäß weiterem Nebenanspruch. Weitere vorteilhafte Ausgestaltungen ergeben sich jeweils aus den darauf rückbezogenen Unteransprüchen.

### Gegenstand der Erfindung

Im Rahmen der Erfindung wurde ein Interkonnektor aus einem ferritischen Chromstahl gefunden, auf dessen Oberfläche zumindest in Teilbereichen eine kupferhaltige Schicht angeordnet ist. Als Material für die kupferhaltige Schicht ist insbesondere reines Kupfer oder eine Kupferlegierung mit mindestens 50 Massenprozent Kupfer geeignet.

Die kupferhaltige Schicht bewirkt eine verbesserte Haltbarkeit des Interkonnektors, wenn er aggressiven Stoffen, wie etwa Nickel, ausgesetzt ist. Eine solche Situation ist insbesondere dann gegeben, wenn auf der kupferhaltigen Schicht ein elektrisches Kontaktierungsmittel angeordnet ist.

Beispielsweise ist auf der kupferhaltigen Schicht ein elektrisches Kontaktierungsmittel angeordnet, wenn der Interkonnektor in einer Brennstoffzelle oder in einem Brennstoffzellenstapel verwendet wird. Dort wird die Anode der Brennstoffzelle typischerweise durch ein nickelhaltiges Kontaktierungsmittel, wie beispielsweise ein Drahtgeflecht oder ein Netz aus Nickel, elektrisch mit dem Interkonnektor verbunden. Das Drahtgeflecht oder Netz wird dabei mit üblichen Fügeverfahren für metallische Werkstoffe, wie Punktschweißen oder Löten, auf der kupferhaltigen Schicht befestigt.

Alternativ kann unmittelbar auf dem Interkonnektor die Anode einer Brennstoffzelle angeordnet sein, die häufig Nickel enthält.

Die erfindungsgemäß vorgesehene kupferhaltige Schicht bewirkt im Kontakt mit aggressiven Substanzen wie beispielsweise Nickel in dreifacher Hinsicht eine bessere Haltbarkeit der Anordnung.
1) Die Diffusion von Elementen aus dem Stahl, insbesondere Chrom und Mangan, über die kupferhaltige Schicht in den Außenraum wird verlangsamt. Diese unerwünschte Diffusion bewirkt nach dem Stand der Technik, dass sich insbesondere auf im Kontakt, mit dem Interkonnektor stehenden Nickel-Oberflächen Chromoxide wie beispielsweise Cr₂O₃ oder Cr₂MnO₄ bilden. In Brennstoffzellen hat dies die nachteilige Wirkung, dass die erwünschte katalytische Wirkung dieser Nickel-Oberflächen vermindert wird. Erfindungsgemäß bleibt diese katalytische Wirkung nun über lange Zeit erhalten.
2) Die Diffusion von Nickel aus der Umgebung, insbesondere aus einem auf der kupferhaltigen Schicht angeordneten elektrischen Kontaktierungsmittel, in den Stahl wird verlangsamt. Diese unerwünschte Diffusion bewirkt nach dem Stand der Technik, dass der Stahl in eine austenitische Struktur umgewandelt wird, was die Oxidationsbeständigkeit des Stahls beeinträchtigt und gleichzeitig seinen Ausdehnungskoeffizienten unerwünscht erhöht. In der Mehrschichtanordnung in einer Brennstoffzelle führt dies zu thermischen Spannungen und schließlich zu Rissbildungen, so dass die Brennstoffzelle unbrauchbar wird. Erfindungsgemäß bleibt nun die ferritische Struktur des Stahls unverändert, so dass diese Probleme für lange Zeit nicht mehr auftreten.
3) Da die unmittelbar an der Oberfläche des Stahls gebildete Oxidschicht nicht mehr mit Nickel aus der Umgebung in Kontakt kommt, kann sie nicht mehr durch Nickel angegriffen werden. Nach dem Stand der Technik kommt der Stahl beispielsweise in direkten Kontakt mit Nickel, wenn auf dem Interkonnektor ein nickelhaltiges elektrisches Kontaktierungsmittel angeordnet ist. An den Kontaktstellen zwischen Stahl und Nickel ist der Stahl nicht mehr gegen Einlagerung von Kohlenstoff geschützt. Der Interkonnektor kommt beispielsweise dann mit Kohlenstoff in Kontakt, wenn er in einer Brennstoffzelle verwendet wird und diese mit einem kohlenstoffhaltigen Brennstoff, wie beispielsweise Methan oder Methanol, betrieben wird. Die Kohlenstoffeinlagerung bewirkt nachteilig eine Aufkohlung des Stahls und versprödet ihn dadurch. Erfindungsgemäß wird nun zum Einen die Oxidschicht auf dem Stahl nicht mehr angegriffen, und zum Anderen schützt die, kupferhaltige Schicht selbst den Stahl vor dem Kontakt mit Kohlenstoff, da Kupfer eine extrem geringe Löslichkeit für Kohlenstoff aufweist. Im Ergebnis wird nahezu kein Kohlenstoff mehr in den Stahl eingelagert, und der Stahl bleibt duktil.

Vorteilhaft enthält der Interkonnektor eine chromhaltige Oxidschicht, die die Interdiffusion zwischen dem Stahl und seiner Umgebung, insbesondere zwischen dem Stahl und einem elektrischen Kontaktierungselement aus Nickel, noch weiter verlangsamt.

Unter Interdiffusion zwischen zwei Materialien A und B wird eine wechselseitige Diffusion der beiden Materialien ineinander verstanden. A diffundiert in B, und B diffundiert in A.

Die chromhaltige Oxidschicht kann beispielsweise gebildet werden, indem beim Einsatz des Interkonnektors in einer Hochtemperaturbrennstoffzelle oder auch bei einer Voroxidation des Interkonnektors vor seiner ersten Verwendung Chrom und eventuell weitere Elemente (wie beispielsweise Mangan) aus dem Stahl sowie Sauerstoff aus der Umgebung in die kupferhaltige Schicht hineindiffundieren.

In einer besonders vorteilhaften Ausgestaltung ist die chromhaltige Oxidschicht innerhalb der kupferhaltigen Schicht angeordnet. Ist der Interkonnektor an einigen Stellen kontaktiert, so ist die Leitfähigkeit dieser Kontaktstellen dann nicht durch die Oxidschicht beeinträchtigt. Durch die hohe Querleitfähigkeit der kupferhaltigen Schicht verteilt sich ein Stromfluss durch den Interkonnektor über dessen gesamte Querschnittsfläche, so dass ein über die Kontaktierung zugeführter Strom den Interkonnektor in Wesentlichen ungehindert passieren kann. Die Oxidschicht bildet sich üblicherweise etwa in der Mitte der kupferhaltigen Schicht, da die Diffusionsraten von Sauerstoff, Chrom und Mangan in Kupfer etwa gleich groß sind. Geht man von reinem Kupfer zu Legierungen mit geringerem Kupfergehalt über, ändert sich nur die relative Lage der Oxidschicht.

Ist die Diffusion von Elementen aus dem Stahl in die kupferhaltige Schicht durch weitere Maßnahmen unterdrückt, kann die Oxidschicht alternativ an der Grenzfläche der kupferhaltigen Schicht zum Chromstahl angeordnet sein. Auch in diesem Fall wird ein Stromfluss durch den Interkonnektor nicht wesentlich behindert.

In einer besonders vorteilhaften Ausgestaltung der Erfindung ist an der Grenzfläche des Chromstahls zur kupferhaltigen Schicht eine zusätzliche Cr₂O₃-Schicht angeordnet. Diese zusätzliche Oxidschicht bildet eine weitere Barriere gegen Interdiffusion zwischen dem Interkonnektor und weiteren Bauelementen, die mit ihm in Kontakt stehen. Eine solche Cr₂O₃-Schicht kann beispielsweise gebildet werden, indem der Stahl vor dem Aufbringen der kupferhaltigen Schicht voroxidiert wird. Sie weist vorteilhaft eine Dicke zwischen 0,2 und 3 µm auf.

Die sinnvolle Dicke der kupferhaltigen Schicht hängt von der jeweiligen Konstruktion der Brennstoffzellen sowie von deren Betriebstemperatur und Betriebsdauer ab. Sie kann durch den Fachmann in einer zumutbaren Anzahl Versuche ermittelt werden. Vorzugsweise weist die kupferhaltige Schicht, einschließlich einer eventuellen zusätzlichen chromhaltigen Oxidschicht, jedoch eine Dicke zwischen 5 und 1000 µm, insbesondere zwischen 10 und 50 µm, auf. Die kupferhaltige Schicht kann mit konventionellen Beschichtungsverfahren aufgebracht werden. Hierfür sind beispielsweise Sputtern, galvanische Abscheidung, Plattieren oder auch Spritzverfahren wie Vakuumplasmaspritzen (VPS), atmosphärisches Plasmaspritzen (APS) oder Hochgeschwindigkeitsflammspritzen (HVOF) geeignet.

Der erfindungsgemäße Interkonnektor eignet sich besonders zur Verwendung in einer Brennstoffzelle oder in einem Brennstoffzellenstapel. Bei einer solchen Verwendung kann die Anode der Brennstoffzelle über ein elektrisches Kontaktierungsmittel mit dem Interkonnektor verbunden werden. Dieses Kontaktierungsmittel kann Nickel enthalten und insbesondere ein Drahtgeflecht oder ein Netz sein, welches mittels Punktschweißen oder Löten auf der kupferhaltigen Schicht befestigt ist.

Alternativ ist unmittelbar auf der kupferhaltigen Schicht die Anode einer Brennstoffzelle angeordnet. Dies bewirkt eine bestmögliche elektrische Kontaktierung zum Interkonnektor und bei Verwendung in einem Brennstoffzellenstapel auch zur benachbarten Brennstoffzelle. Zugleich wird die Anordnung hierdurch kompakt, was insbesondere für Brennstoffzellenstapel aus vielen Einzelzellen zum mobilen Einsatz von Vorteil ist. Durch die erfindungsgemäße kupferhaltige Schicht wird diese vorteilhafte Anordnung in vielen Fällen überhaupt erst technisch sinnvoll, denn die Anode einer Hochtemperaturbrennstoffzelle enthält häufig Nickel in Form von Nickeloxid oder metallischem Nickel. Nach dem Stand der Technik muss bei dieser Anordnung der Nachteil in Kauf genommen werden, dass das Nickel auf die oben beschriebene Weise den Stahl schädigt und umgekehrt Elemente aus dem Stahl die Anode schädigen.

An Stelle von Kupfer können auch andere metallische Elemente oder Legierungen verwendet werden. Geeignet sind insbesondere Materialien, die
- bei der Betriebstemperatur einer Hochtemperaturbrennstoffzelle nicht oder nur geringfügig in den Stahl diffundieren,
- bei der Betriebstemperatur oder der Temperatur, bei der der Stahl voroxidiert wird, vergleichbare Löslichkeiten für Chrom, Mangan und Sauerstoff aufweisen sowie
- in der Betriebsatmosphäre der Brennstoffzelle nicht oxidieren.

Diese Bedingungen werden beispielsweise von Kupferlegierungen mit mindestens 50 Massenprozent Kupfer erfüllt.

Im Rahmen der Erfindung wurde ein Verfahren zur Herstellung eines Interkonnektors aus einem ferritischen Chromstahl entwickelt. Bei diesem Verfahren wird auf dem Interkonnektor zumindest in Teilbereichen seiner Oberfläche eine kupferhaltige Schicht aufgebracht. Diese verhindert auf die oben beschriebene Weise eine Interdiffusion zwischen dem Chromstahl und den Materialien, mit denen der Interkonnektor in Kontakt steht.

In einer besonders vorteilhaften Ausgestaltung der Erfindung diffundieren Chrom aus dem Interkonnektor in die kupferhaltige Schicht und Sauerstoff aus der Umgebung in die kupferhaltige Schicht. Sie bilden dabei eine chromhaltige Oxidschicht, die die Interdiffusion zwischen dem Chromstahl und der Umgebung des Interkonnektors weiter vermindert. Wo sich die chromhaltige Oxidschicht bildet, hängt vom Verhältnis der Diffusionsgeschwindigkeiten von Chrom und Sauerstoff ab. Diffundieren Chrom und Sauerstoff jeweils ungehindert in die kupferhaltige Schicht, bildet sich die Oxidschicht typischerweise in der Mitte der kupferhaltigen Schicht. Wird die Diffusion von Chrom aus dem Stahl durch weitere Maßnahmen unterdrückt, kann sich die Oxidschicht aber auch an der Grenzfläche der kupferhaltigen Schicht zum Chromstahl bilden.

Dieses Verfahren ist wesentlich einfacher als die direkte Herstellung einer Dreifachschicht aus einer kupferhaltigen Schicht, einer chromhaltigen Oxidschicht und einer weiteren kupferhaltigen Schicht auf dem Chromstahl. Wird der Interkonnektor beispielsweise in einer Hochtemperaturbrennstoffzelle eingesetzt, bildet sich die Oxidschicht vorteilhaft während des Betriebs aus. Chrom diffundiert, eventuell zusammen mit weiteren Metallen wie etwa Mangan, vom Stahl in die kupferhaltige Schicht. Sauerstoff diffundiert aus der Betriebsatmosphäre der Brennstoffzelle in die kupferhaltige Schicht.

Neben Kupfer sind Elemente und Legierungen geeignet, die
- bei der Betriebstemperatur einer Hochtemperaturbrennstoffzelle nicht oder nur geringfügig in den Stahl diffundieren,
- bei der Betriebstemperatur oder der Temperatur, bei der der Stahl voroxidiert wird, vergleichbare Löslichkeiten für Chrom, Mangan und Sauerstoff aufweisen sowie
- in der Betriebsatmosphäre der Brennstoffzelle nicht oxidieren.

Diese Bedingungen werden beispielsweise von Kupferlegierungen mit mindestens 50 Massenprozent Kupfer erfüllt.

Vorteilhaft wird der Interkonnektor einer Wärmebehandlung unterzogen. Dabei können die Bedingungen, unter denen sich die Oxidschicht bildet, weitaus besser kontrolliert werden als wenn diese beim ersten Einsatz des Interkonnektors bei hohen Temperaturen gebildet wird. Im Ergebnis weist die Oxidschicht eine höhere Qualität auf. Sie ist somit länger haltbar und verlangsamt die Interdiffusion in den Stahl hinein und aus ihm heraus stärker.

In einer besonders vorteilhaften Ausgestaltung der Erfindung wird die Wärmebehandlung vor dem Aufbringen der kupferhaltigen Schicht durchgeführt. Dann bildet sich auf dem Chromstahl eine Cr₂O₃-Schicht, die eine noch bessere Barriere gegen Interdiffusion zwischen dem Chromstahl und seiner möglicherweise nickelhaltigen Umgebung darstellt. Beim Hochtemperatureinsatz nach Aufbringen der kupferhaltigen Schicht wächst diese Cr₂O₃-Schicht weiter. Es entsteht jedoch keine Oxidschicht innerhalb der kupferhaltigen Schicht, sondern nur an der Grenzfläche zwischen dem Stahl und der kupferhaltigen Schicht.

Die Wärmebehandlung wird vorteilhaft bei einer Temperatur oberhalb von 800 °C, insbesondere oberhalb von 1000 °C, durchgeführt. Die nötige Zeit für die Wärmebehandlung variiert zwischen 1 und 100 Stunden. Sie richtet sich nach der gewählten Temperatur; bei höheren Temperaturen sollten kürzere Zeiten gewählt werden, da die Wachstumsrate des Oxids mit steigender Temperatur zunimmt.

Vorteilhaft wird während der Wärmebehandlung an der Metallschicht ein Oxidationsgas vorgelegt, dessen Sauerstoffpartialdruck bei der gewählten Temperatur geringer ist als der Zersetzungsdruck eines Oxids aus dem Metall M bei dieser Temperatur. Dann ist sichergestellt, dass das Metall M während der Wärmebehandlung nicht oxidiert. Das Oxidationsgas kann beispielsweise ein Gemisch aus 94 Volumenprozent Argon, 4 Volumenprozent Wasserstoff und 2 Volumenprozent Wasserdampf sein. Bei einer Temperatur von 800 °C und Kupfer als Metall M ist mit diesem Gas sichergestellt, dass das Kupfer nicht oxidiert.

### Spezieller Beschreibunasteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Zwei Ausführungsfonnen des erfindungsgemäßen Interkonnektors mit elektrischen Kontaktierungselementen 4 aus Nickel. Teilbild a: mit einer Oxidschicht 3 innerhalb der kupferhaltigen Schicht 2. Teil- bild b: mit einer Oxidschicht 3 zwischen Interkonnektorstahl 1 und kupferhaltiger Schicht 2.
- Figur 2:: Schliff durch die in Figur 1 b skizzierte Ausführungsform des erfin- dungsgemäßen Interkonnektors.

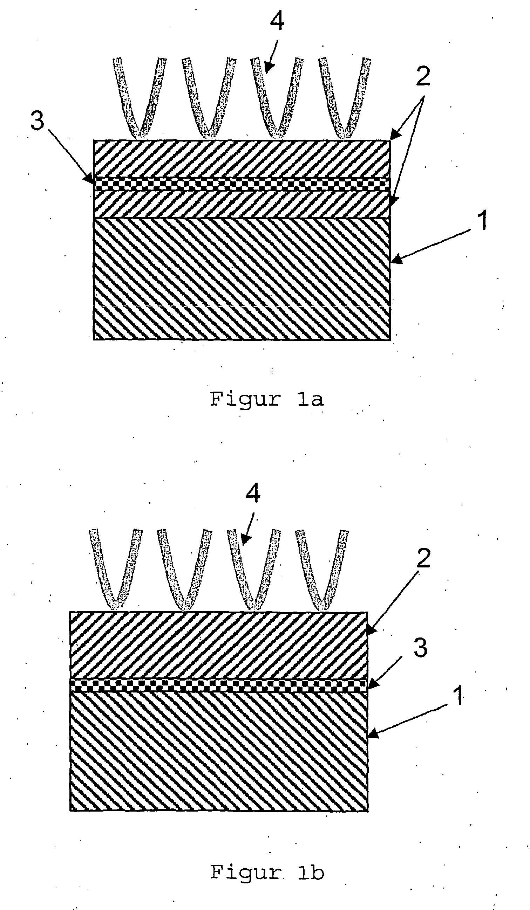

Figur 1 zeigt zwei Ausführungsformen des erfindungsgemäßen Interkonnektors. Auf dem Interkonnektorstahl 1 sind jeweils eine kupferhaltige Schicht 2 und eine chromhaltige Oxidschicht 3 angeordnet. In Teilbild a befindet sich die Oxidschicht 3 innerhalb der kupferhaltigen Schicht 2. In Teilbild b befindet sie sich zwischen Interkonnektorstahl 1 und kupferhaltiger Schicht 2. Auf der kupferhaltigen Schicht 2 sind jeweils elektrische Kontaktierungselemente 4 aus Nickel angeordnet.

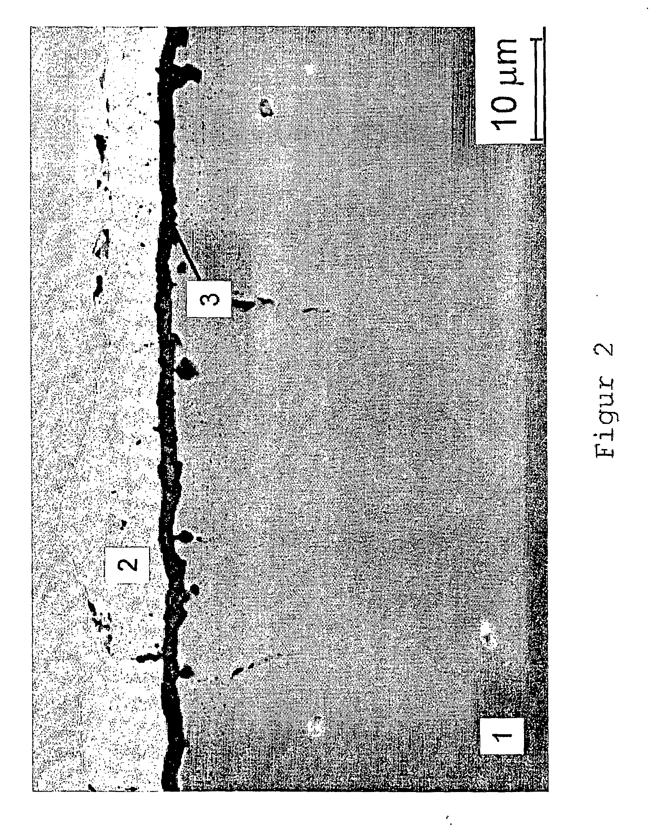

Figur 2 zeigt einen Schliff durch die in Figur 1 b skizzierte Ausführungsform des erfindungsgemäßen Interkonnektors. Der Interkonnektorstahl 1 wurde zunächst für 20 Stunden bei 800 °C voroxidiert. Dabei wurde ein Gemisch aus 94 Volumenprozent Argon, 4 Volumenprozent Wasserstoff und 2 Volumenprozent Wasserdampf als Oxidationsgas vorgelegt. Nach der Voroxidation wurde die kupferhaltige Schicht 2 aufgebracht, und der Interkonnektor wurde unter den gleichen Bedingungen noch einmal für 1000 Stunden oxidiert. Das Endprodukt enthält an der Grenzfläche zwischen Interkonnektorstahl 1 und kupferhaltiger Schicht 2 eine stabile Oxidschicht 3.

Die Oxidschicht 3 entsteht bereits bei der Voroxidation. Sie ist eine zweilagige Schicht aus Cr₂O₃ und Cr₂MnO₄. Bei 800°C wächst diese Schicht etwa nach einem parabolischen Zeitgesetz. Bei der zweiten Oxidation nach dem Aufbringen der kupferhaltigen Schicht 2 auf diese Oxidschicht 3 wächst die Oxidschicht 3 weiter. Die kupferhaltige Schicht 2 hat keinen Einfluss auf die Zusammensetzung der zweilagigen Oxidschicht 3 aus Cr₂O₃ und Cr₂MnO₄. Sie beeinflusst nur die Wachstumsrate dieser Schicht bei der zweiten Oxidation, da sie die Diffusion des Sauerstoffs beeinflusst.

Alternativ kann die Kombination aus Oxidschicht und kupferhaltiger Schicht auch aus einer kupferoxidhaltigen Schicht erzeugt werden. Hierzu wird der nicht voroxidierte Chromstahl zunächst mit der kupferoxidhaltigen Schicht versehen, welche vorzugsweise eine Dicke zwischen 2 und 30 µm aufweist. Die Schicht kann über herkömmliche Beschichtungsverfahren, wie beispielsweise Sputtern, Plasmaspritzen, Schlickerguss oder als Suspension, aufgebracht werden.

Der Stahl wird nun wärmebehandelt, vorzugsweise bei Temperaturen zwischen 600 und 900°C. Hierbei wird vorzugsweise ein reduzierendes Gas oder Gasgemisch vorgelegt, um eine Atmosphäre zu schaffen, in der Kupferoxid thermodynamisch nicht stabil ist. Die Zeiten und sonstigen Parameter der Wärmebehandlung können wie bei der oben beschriebenen Voroxidation gewählt werden.

Während der Wärmebehandlung wird das Kupferoxid von der Außenseite her zu Kupfer reduziert. An der Grenzfläche zum Stahl wird Chrom aus dem Stahl das Kupferoxid reduzieren, wobei auf dem Stahl die gewünschte Oxidschicht auf Basis von Cr₂O₃ entsteht.

## Patentansprüche

1. Interkonnektor für eine Brennstoffzelle aus einem ferritischen Chromstahl (1), **gekennzeichnet durch** eine zumindest in Teilbereichen seiner Oberfläche angeordnete kupferhaltige Schicht aus Kupfer oder einer Kupferlegierung (2),
**dadurch gekennzeichnet,**
**dass** eine zusätzliche chromhaltige Oxidschicht aus Cr₂O₃ (3) an der Grenzfläche der kupferhaltigen Schicht (2) zum Chromstahl (1) angeordnet ist.

2. Interkonnektor nach Anspruch 1, **gekennzeichnet durch** mindestens 50 Massenprozent Kupfer in der kupferhaltigen Schicht (2).

3. Interkonnektor nach Anspruch 3, **dadurch gekennzeichnet, dass** eine weitere Oxidschicht (3) innerhalb der kupferhaltigen Schicht angeordnet ist.

4. Interkonnektor nach einem der Ansprüche 1 bis 3, **gekennzeichnet durch** eine Dicke der Cr₂O₃- Schicht (3) zwischen 0,2 und 3 µm.

5. Interkonnektor nach einem der Ansprüche 1 bis 4, **gekennzeichnet durch** eine Dicke der kupferhaltigen Schicht (2) einschließlich der zusätzlichen chromhaltigen Cr₂O₃- Oxidschicht (3) zwischen 5 und 1000 µm.

6. Interkonnektor nach Anspruch 5, **gekennzeichnet durch** eine Dicke der kupferhaltigen Schicht (2) einschließlich der zusätzlichen chromhaltigen Cr₂O₃-Oxidschicht (3) zwischen 10 und 50 µm.

7. Interkonnektor nach einem der Ansprüche 1 bis 5, **gekennzeichnet durch** mindestens ein elektrisches Kontaktierungsmittel (4), welches auf der kupferhaltigen Schicht (2) angeordnet ist.

8. Interkonnektor nach Anspruch 6, **gekennzeichnet durch** ein nickelhaltiges Kontaktierungsmittel (4).

9. Interkonnektor nach Anspruch 7, **gekennzeichnet durch** ein Drahtgeflecht oder Netz aus Nickel als Kontaktierungsmittel (4).

10. Interkonnektor nach Anspruch 8, **dadurch gekennzeichnet, dass** das Drahtgeflecht oder Netz mittels Punktschweißen oder Löten auf der kupferhaltigen Schicht (2) befestigt ist.

11. Interkonnektor nach einem der Ansprüche 1 bis 9, **dadurch gekennzeichnet, dass** die Anode einer Brennstoffzelle unmittelbar auf der kupferhaltigen Schicht (2) angeordnet ist.

12. Verfahren zur Herstellung eines Interkonnektors für eine Brennstoffzelle (1) nach einem der Ansprüche 1 bis 8, bei dem zumindest in Teilbereichen seiner Oberfläche eine kupferhaltige Schicht (2) aus Kupfer oder einer Kupferlegierung aufgebracht wird, **dadurch gekennzeichnet, dass** der Interkonnektor vor dem Aufbringen der kupferhaltigen Schicht (2) einer Wärmebehandlung unterzogen wird.

13. Verfahren nach Anspruch 12, **dadurch gekennzeichnet, dass** die Wärmebehandlung bei einer Temperatur oberhalb von 800 °C, insbesondere, oberhalb von 1000 °C erfolgt.

14. Verfahren nach einem der Ansprüche 12 bis 13, **dadurch gekennzeichnet, dass** während der Wärmebehandlung ein Gemisch aus 94 Volumenprozent Argon, 4 Volumenprozent Wasserstoff und 2 Volumenprozent Wasserdampf als Oxidationsgas vorgelegt wird.

15. Verfahren nach einem der Ansprüche 12 bis 14, **dadurch gekennzeichnet, dass** Chrom aus dem Interkonnektor (1) in die kupferhaltige Schicht (2) diffundiert, und so eine weitere Oxidschicht (3) innerhalb der kupferhaltige Schicht (2) ausbildet.

## Claims

1. Interconnector for a fuel cell made of a ferritic chromium steel (1), **characterised by** a copper containing layer made of copper or a copper alloy (2) arranged at least in part areas of its surface, **characterised in that**
an additional chromium containing oxide layer made of Cr₂O₃ (3) is arranged in the border area between the copper containing layer (2) and the chromium steel (1).

2. Interconnector according to claim 1, **characterised by** at least 50 percent by mass of copper in the copper containing layer (2).

3. Interconnector according to claim 3, **characterised in that** a further oxide layer (3) is arranged in the copper containing layer.

4. Interconnector according to one of claims 1 to 3, **characterised by** a thickness of the Cr₂O₃ layer (3) of between 0.2 and 3 µm.

5. Interconnector according to one of claims 1 to 4, **characterised by** a thickness of the copper containing layer (2) including the additional chromium containing Cr₂O₃ oxide layer (3) of between 5 and 1000 µm.

6. Interconnector according to claim 5, **characterised by** a thickness of the copper containing layer (2) including the additional chromium containing Cr₂O₃ oxide layer (3) of between 10 and 50 µm.

7. Interconnector according to one of claims 1 to 5, **characterised by** at least one electrical means of contacting (4), which is arranged on the copper containing layer (2).

8. Interconnector according to claim 6, **characterised by** a nickel containing means of contacting (4).

9. Interconnector according to claim 7, **characterised by** a wire mesh or network made of nickel as the means of contacting (4).

10. Interconnector according to claim 8, **characterised in that** the wire mesh or network is fastened to the copper containing layer (2) by means of spot welding or soldering.

11. Interconnector according to one of claims 1 to 9, **characterised in that** the anode of a fuel cell is arranged directly on the copper containing layer (2).

12. Method for the production of an interconnector for a fuel cell (1) according to one of claims 1 to 8, in which a copper containing layer (2) made of copper or a copper alloy is applied at least in part areas of its surface, **characterised in that** the interconnector is subject to heat treatment before application of the copper containing layer (2).

13. Method according to claim 12, **characterised in that** the heat treatment is carried out at a temperature over 800° C, particularly over 1000° C.

14. Method according to one of claims 12 to 13, **characterised in that** a mixture or 94 percent by volume of argon, 4 percent by volume of hydrogen and 2 percent by volume of steam is supplied as the oxidation gas during heat treatment.

15. Method according to one of claims 12 to 14, **characterised in that** chromium from the interconnector (1) is diffused into the copper containing layer (2) and in this way forms a further oxide layer (3) in the copper containing layer (2).

## Revendications

1. Interconnecteur pour une pile à combustible en acier chromé ferritique (1), **caractérisé par** une couche à teneur en cuivre ou en alliage de cuivre (2) disposée au moins sur des zones partielles de sa surface, **caractérisé**
**en ce qu'**une couche additionnelle d'oxyde de Cr₂O₃ (3) à teneur en chrome est disposée contre la surface limitrophe à l'acier chromé de la couche à teneur en cuivre (2).

2. Interconnecteur selon la revendication 1, **caractérisé par** au moins 50 % de cuivre en masse dans la couche à teneur en cuivre (2).

3. Interconnecteur selon la revendication 3, **caractérisé en ce qu'**une autre couche d'oxyde (3) est disposée à l'intérieur de la couche à teneur en cuivre.

4. Interconnecteur selon l'une des revendications 1 à 3, **caractérisé par** une épaisseur de la couche de Cr₂O₃ (3) comprise entre 0,2 et 3 µm.

5. Interconnecteur selon l'une des revendications 1 à 4, **caractérisé par** une épaisseur de la couche à teneur en cuivre (2) comprise entre 5 et 1000 µm, incluant la couche additionnelle d'oxyde de Cr₂O₃ (3) à teneur en chrome.

6. Interconnecteur selon la revendication 5, **caractérisé par** une épaisseur de la couche à teneur en cuivre (2) comprise entre 10 et 50 µm, incluant la couche additionnelle d'oxyde de Cr₂O₃ (3) à teneur en chrome.

7. Interconnecteur selon l'une des revendications 1 à 5, **caractérisé par** au moins un élément de contact électrique (4) disposé sur la couche à teneur en cuivre (2).

8. Interconnecteur selon la revendication 6, **caractérisé par** un élément de contact électrique (4) à teneur en nickel.

9. Interconnecteur selon la revendication 7, **caractérisé par** un treillis métallique ou un maillage en nickel comme élément de contact électrique (4).

10. Interconnecteur selon la revendication 8, **caractérisé en ce que** le treillis métallique ou le maillage est fixé par soudage par points ou par brasage sur la couche à teneur en cuivre (2).

11. Interconnecteur selon l'une des revendications 1 à 9, **caractérisé en ce que** l'anode d'une pile à combustible est directement disposée sur la couche à teneur en cuivre (2).

12. Procédé de fabrication d'un interconnecteur pour une pile à combustible (1) selon l'une des revendications 1 à 8, une couche à teneur en cuivre ou en alliage de cuivre (2) étant appliquée au moins sur des zones partielles de sa surface, **caractérisé**
**en ce que** l'interconnecteur est soumis à un traitement thermique préalablement à l'application de la couche à teneur en cuivre (2).

13. Procédé selon la revendication 12, **caractérisé en ce que** le traitement thermique est effectué à une température supérieure à 800 °C, en particulier supérieure à 1000 °C.

14. Procédé selon l'une des revendications 12 ou 13, **caractérisé en ce qu'**un mélange composé de 94 % en volume d'argon, de 4 % en volume d'hydrogène et de 2 % en volume de vapeur d'eau est présenté comme gaz d'oxydation.

15. Procédé selon l'une des revendications 12 à 14, **caractérisé en ce que** le chrome se diffuse de l'interconnecteur (1) dans la couche à teneur en cuivre (2), et forme ainsi une autre couche d'oxyde (3) à l'intérieur de la couche à teneur en cuivre (2).
